# EUROPEAN PATENT SPECIFICATION

(11) **EP 4 422 026 B1**
(45) Date of publication and mention of the grant of the patent: **16.09.2026**
(21) Application number: 24159153.6
(22) Date of filing: 22.02.2024
(51) Int. Cl.: H02J 7/00

(54) **MOBILE CHARGING UNIT FOR SHOPPING CARTS AND SYSTEM**
MOBILE LADEEINHEIT FÜR EINKAUFSWAGEN UND SYSTEM
UNITÉ DE CHARGE MOBILE POUR CHARIOTS ET SYSTÈME D'ACHAT

(30) Priority: 22.02.2023 DE 102023104363
(43) Date of publication of application: 28.08.2024
(73) Proprietor: Pentland Firth Software GmbH, 81379 München (DE)
(72) Inventor: Heinrich, Frank, 81379 Munich (DE)
(74) Representative: Ter Meer Steinmeister & Partner

(56) References cited:
- US-A1- 2017 117 726
- US-A1- 2017 214 262
- US-A1- 2020 254 895

## Description

The present disclosure is directed to a system for charging shopping carts. It comprises: at least one shopping cart having a terminal for outputting/displaying and/or receiving information, an energy storage unit for providing/supplying power to the terminal, and an interface unit for at least receiving power for charging the energy storage unit; and at least one mobile charging unit which comprises: a housing; a power supply device configured to provide power for charging the energy storage unit, the power supply device being positioned within the housing.

### Background and Prior Art

In recent years the shopping procedure by which customers can shop groceries or other products has changed in many shops. Due to assistance systems, particularly self-checkout systems, for example, customers are becoming more autonomous and do not require the assistance of personnel for selection of products and/or for the check-out procedure any longer. A more efficient and comfortable shopping experience is therefore provided to the customers.

In view of this development, a new class of shopping carts which offers different functions and/or assistance has been developed.

For example, in US 2020/0210982 A1, a shopping cart is disclosed which provides a self-checkout system. The shopping cart is connected to a wireless network. The shopping cart has functions related to scanning products, displaying the cost of these products and making a payment for the bill which corresponds to the products which are inside the shopping cart. The container of the shopping cart is provided with a scale to survey the weight of the products placed inside the shopping cart and to control whether the scanned products are inside the shopping cart.

US 2018/0370554 A1 discloses a shopping cart with integrated checkout equipment, comprising a scanner positioned on an interior edge of a basket portion of the shopping cart, a weight sensing means for determining the weight of an item placed into the basket and possibly a second scanner positioned with a tethered connection to the handle.

DE 196 43 122 A1 discloses a shopping cart for self-service shops having an electronic scale to control the weight of products in the area for receiving the products and a code reader to read the barcodes of products.

Further relevant prior art is disclosed in US 2017/214262 A1, US 2017/117726 A1 and US 2020/254895 A1.

As the development of these shopping carts has been initiated only in recent years, there is still a constant need for further improvement of such shopping carts, particularly in view of the maintenance and charging possibilities of such shopping carts.

### Summary of the Invention

It is hence a problem of the present invention and/or one of the embodiments to provide an improved system that allows (re)charging of shopping carts.

It is another object of the present invention and/or one of the embodiments to provide a system that is very robust and adapted to heavy-duty conditions.

It is a further object of the present invention and/or one of the embodiments to provide a system which allows simplified (re)charging of shopping carts.

Moreover, it is an object of the present invention and/or one of the embodiments to provide a system that is robust to rough human handling.

It is a further object of the present invention and/or one of the embodiments to provide a system with a high degree of safety and/or with a low error-proneness.

Further, it is an object of the present invention and/or one of the embodiments to provide a system that makes it efficient for a user to (re)charge a plurality of shopping carts.

Finally, it is an object to provide a mobile charging unit being able to safely charge a plurality of electronic devices, in particular a plurality of carts having at least one electronic component.

At least one of these objects is solved by the mobile charging unit and a system as claimed in the independent claims. Preferred embodiments are given in the dependent claims.

According to an aspect, a system comprises: at least one shopping cart having a terminal for outputting and/or receiving information, an energy storage unit for supplying power to the terminal, and an interface unit for at least receiving power for charging the energy storage unit; and at least one mobile charging unit which comprises: a housing; a power supply device configured to provide power for charging the energy storage unit, the power supply device being positioned within the housing.

According to one aspect a mobile charging unit is provided comprising: a housing, a plurality of wheels, a power supply device inside the housing, a power supply cable at the housing connected to the power supply device and a daisy chain socket.

The housing of the mobile charging unit has the advantage that it protects elements stored inside, such as the power supply device. The elements may be placed inside the inner compartment of the housing and may therefore be protected against liquids, dust, dirt, and/or damage through rough handling. Therefore, the system, particularly the mobile charging unit is robust against contamination.

The mobile charging unit may be easily moved or transported to the shopping carts and after charging, the mobile charging unit may be stored in a different place. For this and other reasons, the system allows simplified (re)charging of shopping carts. Further, the system is an improved system that allows (re)charging of shopping carts. This is particularly the case when the mobile charging unit has a suitcase-like structure which resembles a robust box. In this and other cases, the mobile charging unit may be provided with wheels.

The system makes it efficient for a user to (re)charge a shopping cart, particularly a plurality of shopping carts at the same time.

In general, the shopping cart may comprise: a handle bar and a wagon configured to be pushed in a pushing direction and having a main receiving area. The handle bar may be affixed to the wagon or may be configured to be coupled to and uncoupled from the wagon. The handle bar is typically used for pushing the wagon in the pushing direction.

The terminal may have a box-like structure that is affixed or can be coupled to a portion of the shopping cart such as a handle bar of the shopping cart and/or a frame of a main receiving area, that may be a basket for example, where items can be placed during the shopping. The terminal may particularly be configured to be coupled to the handle bar. The handle bar may then comprise a mounting element and the terminal may then comprise a mating portion or element that allows the terminal to be coupled to the mounting element of the handle bar. In that case, the terminal may comprise a terminal housing with the mating portion to be coupled with the one first extending portion. The terminal may hence be released from the handle bar for maintenance, updating, replacement, charging and/or cleaning.

The shopping cart can allow communication with the user. Particularly, the terminal for outputting and/or receiving information may allow communication with the user and may have a display to receive an input from a user and/or to display data to a user. Some embodiments of a terminal may however not have a display and may only receive data from a phone and/or a cloud for example. The terminal may have a card reader function. The terminal may be considered a computer, it may have a RAM and/or it may have a storage unit for storing data. The terminal may be configured for storing and/or processing information. The terminal may be configured for data exchange via internet, WLAN, Bluetooth, or the like. The terminal may be configured for data exchange with a cloud, a phone and/or another device. The shopping cart with the terminal can assist a user during a shopping process and/or a payment process. Further, the shopping cart makes it safe for a retailer to provide a self-checkout system which prevents the users from providing incorrect data about their purchase.

Furthermore, the shopping cart may allow surveying the shopping process of the user and/or may allow entering data by the user. The shopping cart may make a shopping process more efficient for the user and/or for the retailer.

The energy storage unit may be positioned in and/or on the terminal or connected to the terminal. The energy storage unit may be positioned apart from the terminal, for example on and/or at the handle bar or the wagon, wherein the energy storage unit is then connected via a wire to the terminal to supply the terminal with power.

The system may comprise robust materials and/or elements of the system may be mounted either to the shopping cart or to the mobile charging unit and therefore, the system may be very robust and adapted to heavy-duty conditions. The shopping cart and/or the mobile charging unit may therefore also be robust to rough human handling.

The mobile charging unit may be a unit having a low degree of complexity in view of electronics and/or mechanics and therefore the system may provide a high degree of safety and/or a low error-proneness. The system may also be intuitively used without an introduction to be given to make it easy for a user to (re)charge a shopping cart, particularly a terminal of a shopping cart.

The power supply device of the mobile charging unit may be configured to be coupled with an external energy source. The power supply device may comprise at least one rechargeable battery and/or at least one charging device. A rechargeable battery has the advantage of providing a mobile charging unit that is independent from an external power supply at certain times when being charged. The rechargeable battery may be charged by the external power supply. The power supply device may comprise one, two, three, four, five, six or more charging device(s) and/or rechargeable batteries.

A charging device is a type of power supply and may be considered a Switched Mode Power Supply. It provides a constant voltage (CV) and a constant current (CC) to the user device, providing it with the power (or energy) required to charge it. Often, the required voltage is 5V DC, and the required current is 0.5 A or 1 A. The charging device may rectify the 220/110 V AC from the wall socket and convert it into DC voltage. Further, the charging device may have the function of a filter and may comprise a high frequency (> than 20Khz normally) semiconductor switch. A charging device may hence transform the power from the external power supply and may therefore comprise an AC/DC converter. During the charging of the shopping carts, the charging device needs to be connected to the external power supply, whereas the rechargeable battery does not need to be connected to the external power supply given that the rechargeable battery is charged at least partially.

The power supply device may comprise only one or more of rechargeable batteries or one or more of charging devices or the power supply may comprise both types of power supplies. These potential features of this system make it possible for the user to efficiently charge a plurality of shopping carts at the same time.

The rechargeable battery and/or the charging device may be coupled and/or affixed to the interior of the mobile charging unit. The rechargeable battery and/or the charging device may particularly be coupled with the mobile charging unit by a shock-absorbing coupling including a shock-absorbing material, such as rubber, polymers, and/or springs or spring-like materials. A safe coupling, particularly using shock-absorbing materials, protects the rechargeable battery and/or the charging device from vibrations. The mobile charging unit is configured for use in a rough environment, being moved and/or rolled over a rough floor or ground and therefore the elements in the mobile charging unit are exposed to vibrations over a long time. This may extend the longevity of the elements of the mobile charging unit. The same may apply to elements coupled or affixed to the shopping cart, such as the terminal and/or the energy storage unit being coupled to the shopping cart and/or the terminal.

The at least one mobile charging unit may further comprise: a charge distributer comprising a plurality of ports wherein each port is configured to be connected to the power supply device; and/or at least one charging cable connected to the power supply device and/or to one of the plurality of ports for being connected with the interface unit at the shopping cart or with the energy storage unit of the shopping cart. These potential features of this system make it possible for the user to efficiently charge a plurality of shopping carts at the same time. The charging cable may have a magnetic connector to connect the mobile charging unit easily and safely with the shopping cart.

The charge distributer allows distributing the charge of one or more power supply devices to a plurality of shopping carts via the ports. The charge distributer may have approximately between 2 to 50 ports, preferably between 5 and 30 and more preferably between 7 to 15 ports. The one or more power supply devices may be connected to the charge distributer by means of one or more cables. A plurality of ports allows charging a plurality of shopping carts in an efficient manner. These potential features of this system make it possible for the user to efficiently charge a plurality of shopping carts at the same time.

Alternatively, the one or more power supply devices may be connected directly with the shopping carts via one or more cables without using a charge distributer which is a simplified configuration.

The system may further comprise at least one of a plurality of shopping carts and/or a plurality of mobile charging units. A usual shop provides a plurality of shopping carts to the customers, typically between approximately 30 and 200 or more. For this reason, it is an advantage to charge a plurality of shopping carts at the same time and/or in an efficient manner by means of this system. A plurality of mobile charging units allows charging a high number of shopping carts at the same time. If there are more shopping carts to be charged than ports provided in one mobile charging unit, it is an advantage to provide multiple mobile charging units, such that a high number of shopping carts can be charged at the same time. The plurality of mobile charging units may be 2, 3, 4, 5 or more, such as 10, 15, 20 or more. The plurality of shopping carts may be 10, 20, 30, 40 or more, such as 100, 150, 200 or more. These potential features of this system make it possible for the user to efficiently charge a plurality of shopping carts at the same time.

The system may further comprise a plurality of charging cables connected to the charge distributer or to the power supply device, and/or each one of the charging cables may be configured to provide power from the charge distributer via one of the plurality of ports to the respective energy storage unit of one of the plurality of shopping carts. The plurality of charging cables per charge distributer of one mobile charging unit may correspond to the number of ports, being approximately between 2 to 50 ports, preferably between 5 and 30 and more preferably between 7 to 15 charging cables. These potential features of this system make it possible for the user to efficiently charge a plurality of shopping carts at the same time.

The system may further comprise a power supply cable connected to the power supply device and configured for being connected with the external energy source for receiving power from the external energy source; and/or for being coupled with another mobile charging unit for supplying power from the mobile charging unit to the other mobile charging unit and/or for receiving power from the other mobile charging unit. The power supply cable is provided preferably outside the housing and/or may be connected to the inside of the housing, in particular to the power supply device.

In one or more embodiments, the power supply cable may be provided at one side of the housing and the daisy chain socket may be provided at the opposing other side of the housing.

The power supply cable allows providing power either to the rechargeable battery and/or to the charging device from an external energy source or power supply, such as a socket of the grid or from another mobile charging unit that may be connected to an external energy source or power supply or that may serve as an energy storage, particularly in the case of rechargeable batteries. In other words, a mobile charging unit that is either connected to an external energy source or power supply, such as a socket of the grid or acts as an energy storage may supply other mobile charging units with power via one of the power supply cables of the other mobile charging unit(s), while the supplying mobile charging unit itself might use its own power supply cable for receiving power from the grid or another external energy source, such as a battery or an electric generator. When the energy supply cable is connected to another mobile charging unit it may act as a slave cable and the mobile charging unit which receives power may be considered a slave mobile charging unit. When the energy supply cable is connected to an external energy/power supply, it may act as a main cable and the mobile charging unit which supplies another mobile charging unit may be considered a main mobile charging unit. These potential features of this system make it possible for the user to efficiently charge a plurality of shopping carts at the same time.

The system may further comprise a daisy chain socket for being coupled and/or electrically connected to another mobile charging unit.

The daisy chain socket is preferably coupled and/or connected to the housing of the mobile charging units, more preferably at the opposite side of the housing side having the power supply cable.

The power supply cable of a mobile charging unit may be electrically connected to a daisy chain socket of another mobile charging unit when being supplied with power by the other mobile charging unit.

Multiple mobile charging units may be chained together or electrically connected by this means.

It is particularly advantageous when the daisy chain socket is provided on one side of the housing and the power supply cable is provided on the opposite side, as one of mobile charging units is then positioned between two power supply cables. In this way, one mobile charging unit or one socket might supply a plurality of mobile charging units electrically connected in a row. These potential features of this system make it possible for the user to efficiently charge a plurality of shopping carts at the same time by using multiple charging units.

The daisy chain power supply may be a one-way power supply. Therefore, a first mobile charging unit may be connected to an external power source such as a socket of the grid and the other mobile charging units may therefore be connected to the first mobile charging unit via the daisy chain socket to receive the power from the external power supply.

Alternatively, the daisy chain power supply may be a two-way power supply in which the first mobile charging unit may supply the other mobile charging units in a row with power, for example, from a rechargeable battery within the first mobile charging units and when the rechargeable battery might be empty, one of the mobile charging units in the daisy chain row which has a charged or at least partially charged battery might provide power to the other mobile charging units.

The mobile charging unit may comprise at least one LED and/or each of the ports may be assigned to an LED, preferably the LED may be configured to visibly indicate whether power can be distributed and provided to the energy storage unit via the port. The LED may be positioned inside the housing of the mobile charging unit; therefore, the LED might then only be visible when opening the housing and when the user wants to check the proper function of the power supply device and/or of the ports. Alternatively, the LED may be positioned outside of the housing of the mobile charging unit such that the proper functionality of the power supply device and/or of the ports is visibly indicated outside and always visible to a user from the outside of the housing. Therefore, the housing is not required to be opened. It is preferred that a plurality of LEDs is provided and each of the plurality of LEDs can visibly indicate whether a power supply and particularly whether a port is functional. The LED can close an electrical circuit through which the power is supplied by the power supply and particularly the port. These potential features of this system make it possible for the user to handle the system and diagnose errors in a simplified way which is very intuitive.

The system may further comprise an electrical dummy cell configured to be contacted with the at least one charging cable; and/or configured to indicate whether power can be distributed and provided to the energy storage unit via a respective one of the plurality of ports and a respective one of the plurality of charging cables. As an additional or alternative to the LEDs configured to visibly indicate whether power can be distributed and provided to the energy storage unit via the port, an electrically dummy cell can be provided outside the housing of the mobile charging unit. The electrical dummy cell may be affixed or coupled to the housing, or it is not coupled or affixed to the housing and can be used as a sensor to check whether power is provided through a charging cable. The electrical dummy cell may be a test device for checking whether the charging cable is correctly connected and/or whether it provides any power.

The electrical dummy cell may be an electrical circuit having an element that can indicate whether power is supplied through the charging cable. Such an element may be an LED which can visibly indicate whether power is supplied through the charging cable. Alternatively, the dummy cell may acoustically indicate whether power is supplied through the charging cable. The electrical dummy cell may be configured to be contacted with the at least one charging cable via a magnetic contact with a plurality of pins. These potential features of this system make it possible for the user to handle the system and diagnose errors in a simplified way which is very intuitive.

The mobile charging unit may comprise at least one time delay element configured to delay the delivery of power to another mobile charging unit, preferably via the daisy chain socket.

When a plurality of mobile charging units is chained together, i.e., electrically connected in a row, the power supply may break down in the very moment as too many consumers are connected, i.e. when the mobile charging units with their internal components are supplied with power from an external energy/power source. Particularly, the inrush current of the power supplies during startup may cause the fuse to trip and therefore a time delay can prevent the system to breakdown. In other words, a time delay element may delay the delivery of power/charge to each mobile charging unit to avoid a breakdown of the system. This makes it possible to provide a robust system with a low error-proneness.

The time delay elements may delay the forwarding of power supply by a predetermined time. This time may be set during setting up the system or during operation by a user, if the fuses inside the mobile charging units are released too often or too fast. The time values for each of the time delay elements in the plurality of mobile charging units may be set differently. Thus, it is achieved, that in a chain of multiple mobile charging units the first, second and next mobile charging units are activated, i.e. receive the power supply at different points in time and thus a reliable operation is achieved.

In one or more embodiments, the mobile charging unit may comprise at least one inrush current limiting element.

In one or more embodiments, the mobile charging unit may comprise a controller or distributer for controlling whether and/or when and/or how to supply the incoming power to the daisy chain socket and/or to the power supply device.

The mobile charging unit and the terminal may be configured to exchange data with each other via the charging cable and/or another data cable and/or wirelessly, such as via Bluetooth or internet. The mobile charging unit and/or the terminal may be configured to be connected with a cloud for exchanging data with and/or via the cloud. The mobile charging unit and/or the terminal may therefore comprise a transceiver for receiving and transmitting data particularly in a wireless manner, a data cable for receiving and transmitting data, a computer having a RAM and possibly a storage unit for storing data. The exchanged data may comprise one or more of the following: an operational state of the mobile charging unit and/or the terminal, a charging state of the energy storage unit, an error which has occurred in the mobile charging unit and/or the terminal, a measure to be taken to overcome the error which may be displayed via a display of the terminal. This allows a user to easily monitor the charging process and/or diagnose and/or overcome errors. Such a system can be used intuitively.

The mobile charging unit may comprise at least one of: a box-shaped housing, preferably made of metal, a vertical pillar protruding from an upper portion of the housing for at least partially guiding the at least one charging cable from within the housing out of the housing, a plurality of wheels; and a guide rail spaced apart from the upper portion of the housing. A box-shaped housing, preferably made of metal, is very stable and robust against external physical impact. The surfaces may additionally have a structure (rips or protrusions) which makes the housing even more robust. The housing without elements such as wheels, guiderails or vertical pillar may have a height between approximately 30 cm to 120 cm, preferably between approximately 50 cm and 80 cm. The housing may have a width between approximately 20 cm to 70 cm, preferably between approximately 30 cm to 60 cm. The housing may have a length between approximately 30 cm to 100 cm, preferably between approximately 50 cm and 80 cm.

The vertical pillar may have a top end height that is configured to prevent an end of the at least one charging cable to touch the ground. The top end height is the distance between the ground and the top end of the pillar when being properly used, including for example also the height of the wheels when the housing is provided with wheels. The top end height of the vertical pillar may range between approximately 140 cm and 190 cm, particularly between 150 and 180 cm. The mobile charging unit may comprise several vertical pillars which guide different charging cables. The mobile charging unit may comprise a central vertical pillar which extends from the top center of the housing. The mobile charging unit may comprise two vertical pillars extending from two opposite sides of the top of the housing. This allows distributing the charging cables in a way that the charging cables are prevented from hanging on the floor or being overrun by wheels. Further, it allows distributing the charging cables to different shopping carts in an efficient manner.

A plurality of wheels allows the user to easily move the mobile charging unit over different grounds to the shopping carts and/or to a storage position, which improves the mobility. A guide rail spaced apart from the upper portion of the housing may prevent a user from sitting on the mobile charging unit. Therefore, two guide rails may extend from the upper sides of the housing along at least a portion of the length of the housing. The guide rails may have a top end height that is suited to prevent a user from sitting on the housing. The top end height of the guide rail(s) may range between approximately 100 cm and 140 cm, particularly between 110 and 130 cm. Two guide rails may have different top end heights which makes it even more difficult for a user to sit on the housing. Further, the guide rail(s) may have a rectangular shape or a round shape. A round shape makes it even more difficult for a user to sit on the housing. The top end height of the guide rail(s) is the distance between the ground and the upper most portion of the guide rail(s). The guide rail(s) may extend from an edge of an upper side of the housing which has the advantage that the guide rail may be used as a handle for pushing the mobile charging unit. In that case, a person may grab two mobile charging units on their guide rails with one hand, which makes it easy and efficient for the user to handle the system. Overall, the potential features of this system provide a high degree in robustness of the system and/or efficacy and/or convenience in handling.

The housing may comprise a first sub-compartment for storing at least a portion of the at least one charging cable when not being used, preferably, the first sub-compartment may comprise a flap configured to be manually opened and/or the first sub-compartment may be configured to store a cleaning solution for cleaning at least a portion of the at least one charging cable. The flap may comprise a notch that allows guiding the charging cable through. The first sub-compartment may be an upper sub-compartment that is above a second sub-compartment, which is a lower sub-compartment. The two sub-compartments may be separated by a wall and may be sealed against each other. Electronic devices such as the power supply device may be stored in the lower sub-compartment. The flap may allow to open and close the first sub-compartment manually from above. When the charging cable or the charging cables is/are not used they can at least partially be stored in the first sub-compartment. At least the ends of the charging cable may be stored inside the first sub-compartment. The first sub-compartment may house a cleaning solution and/or a cleaning bath that is used for cleaning at least the end of the charging cable. These features make it easy and/or safe and/or convenient for a user to use the system. The first sub-compartment may provide holding elements for the cleaning solution and/or a cleaning bath for avoiding a spilling out of the cleaning solution during movement of the mobile charging unit.

The system may be configured for wirelessly charging the energy storage unit. Therefore, the mobile charging unit may have a contact space which allows contactless charging of the energy storage unit. The mobile charging unit is therefore brought into the vicinity of the energy storage unit and the energy storage unit can be charged without the need for a charging cable, which makes it even easier for a user to charge the shopping cart.

The system may comprise an anti-theft system. The anti-theft system may comprise a lock, an alarm and/or a blocking system which blocks the wheels of the mobile charging unit and/or the shopping cart. The lock may prevent the mobile charging unit from being uncoupled from the shopping cart(s) during the charging process. The alarm may include a noise and/or a visible sign that indicate(s) theft and/or deter a thief. Furthermore, there might be a GPS module inside the housing to be able to provide wirelessly its location to a server for checking whether the mobile charging unit is still in allowed area.

### Brief Description of the Drawings

Embodiments of the present invention are described in the following by means of the figures in more detail. The figures display different features off embodiments. The features are not limited to these embodiments. All the features of the embodiments can generally be combined if they are not contradicting each other. Further, features of the embodiments which are not essential to the embodiments may also not be part of the embodiments.
Fig. 1A is a schematic drawing of a system according to an embodiment;
Fig. 1B is a detail of Fig. 1A;
Fig. 2 is a schematic drawing of a shopping cart with a terminal according to an embodiment;
Fig. 3A is a perspective side view of a schematic drawing of a mobile charging unit with an opened housing according to an embodiment;
Fig. 3B is a perspective side view of a schematic drawing of a mobile charging unit according to a further embodiment;
Fig. 3C is a perspective side view of a schematic drawing of a mobile charging unit with an opened housing according to another embodiment;
Fig. 4A is a schematic diagram illustrating the electrical connections of a system according to an embodiment;
Fig. 4B is a schematic diagram illustrating the electrical connections of a system according to another embodiment;
Fig. 5a is a perspective side view of a schematic drawing of the mobile charging unit according to the embodiment of Fig. 3A;
Fig. 5b is another perspective side view of a schematic drawing of the mobile charging unit according to the embodiment of Fig. 3A;
Fig. 5c is a side view of a schematic drawing of the mobile charging unit with an opened housing according to the embodiment of Fig. 3A;
Fig. 5d is a side view of a schematic drawing of the mobile charging unit with a closed housing according to the embodiment of Fig. 3A;
Fig. 6a is a side view of a schematic drawing of the mobile charging unit according to the embodiment of Fig. 3A;
Fig. 6b is perspective top view of a schematic drawing of the mobile charging unit according to the embodiment of Fig. 3A;
Fig. 6c is a top view of a schematic drawing of the mobile charging unit according to the embodiment of Fig. 3a;
Fig. 6d is a detail of Fig. 6b;
Fig. 7A is a front side view of a schematic drawing of the mobile charging unit according to the embodiment of Fig. 3A;
Fig. 7B is a side view of a schematic drawing of the mobile charging unit according to the embodiment of Fig. 3A;
Fig. 7C is a back side view of a schematic drawing of the mobile charging unit according to the embodiment of Fig. 3A;
Fig. 8A is a perspective side view of a schematic drawing of the mobile charging unit according to another embodiment;
Fig. 8B is a another perspective side view of a schematic drawing of the mobile charging unit according to the other embodiment
Fig. 8C is a side view of a schematic drawing of the mobile charging unit according to the other embodiment, and
Fig. 9 and Fig. 10 correspond to a circuit diagram of a mobile charging unit according to an embodiment.

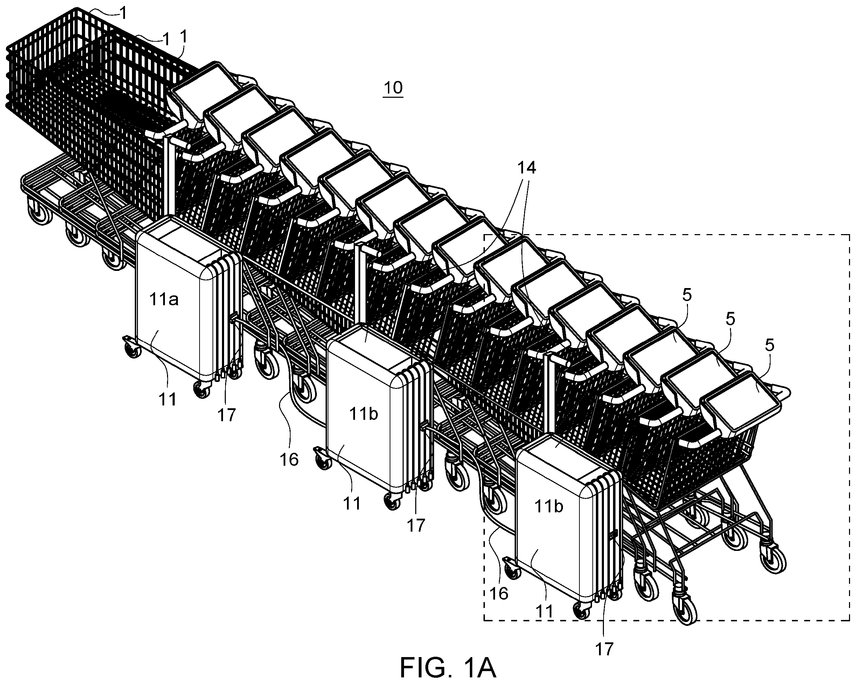

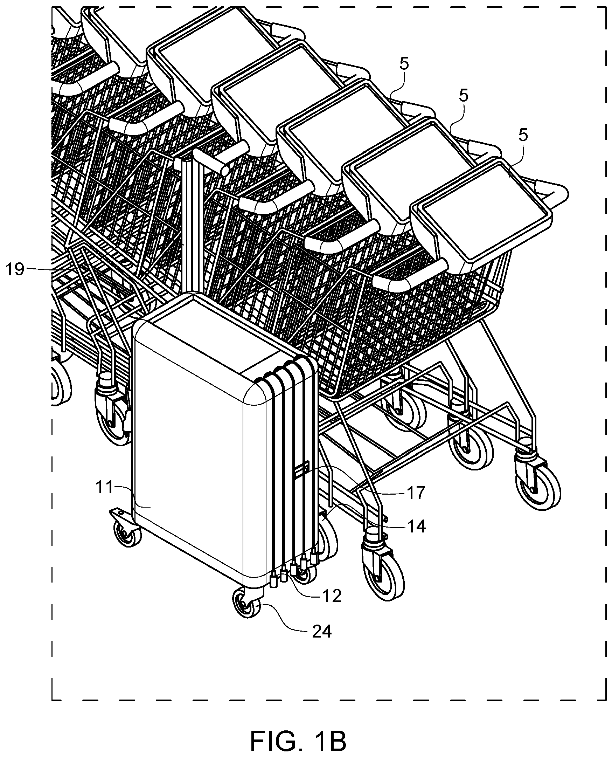

In Fig. 1a, a schematic drawing of a system 10 according to an embodiment is shown and in Fig. 1b, a detail of Fig. 1a is shown. In this embodiment 15 shopping carts 1 are provided, wherein each shopping cart has a terminal 5. Furthermore, three mobile charging units 11 are provided, being electrically connected in a row with each other by means of daisy chain sockets and power supply cables 16 which are connected to the daisy chain socket of another mobile charging unit 11.

In Fig. 1a, a first mobile charging unit 11 acts as a main module 11a which supplies power to other mobile charging units 11 acting as slave modules 11b. The main module 11a provides power to a slave module 11b via the daisy chain socket of the main module 11a to which the power supply cable 16 of the slave module 11b is connected. Another slave module 11b can receive power from the main module 11a. Therefore, the other slave module 11b is electrically connected via its power supply cable 16 to the daisy chain socket of the slave module 11b that is connected to the main module 11a. The main module 11a may either have a charging device which is connected to an external power supply or may have a rechargeable battery that can provide the shopping carts 1 and the slave modules 11b with power without the need for being connected to an external power supply.

The mobile charging units 11 can be aligned in a row next and/or parallel to the aligned shopping carts 1 and each mobile charging unit 11 can charge the according energy storage unit of one or more shopping carts 1 via a charging cable 14.

As can be seen best from the detail in Fig. 1b of one mobile charging unit 11, five charging cables 14 are extending out of the housing 12 of the mobile charging unit 11 through an opening on the top side of the housing 12. These charging cables 14 may be connected to the energy storage unit of a shopping cart 1, respectively. The length of the charging cables 14 is configured to be long enough for reaching an energy storage unit/interface of a shopping cart 1 when the mobile charging unit 11 is positioned next or near the shopping cart 1, but not long enough to reach the ground such that the end of the charging cable 14 is protected from being run over by a wheel or from getting contaminated by dirt and/or fluids on the floor, which makes the system safe, easy to use and extends the longevity of the mobile charging unit 11.

The mobile charging units 11 each have a vertical pillar 19 (denoted "pillar") which extends from one upper edge of the housing 12. The pillar 19 is configured for guiding other charging cables 14 out of the housing. The top end height of the pillar 19 is configured to prevent the charging cables 14 from reaching the ground. The pillar 19 may also be used as handle to push or pull the mobile charging unit 11. For easily pushing or pulling the mobile charging unit 11 around, four wheels 24 are provided on the lower side of the housing 12 of the mobile charging unit 11. The pillar 19 may have a horizontal portion which may be used as a handle and/or for guiding the charging cables 14.

The invention is not limited to this particular embodiment and can have more or less shopping carts 1 or mobile charging units 11.

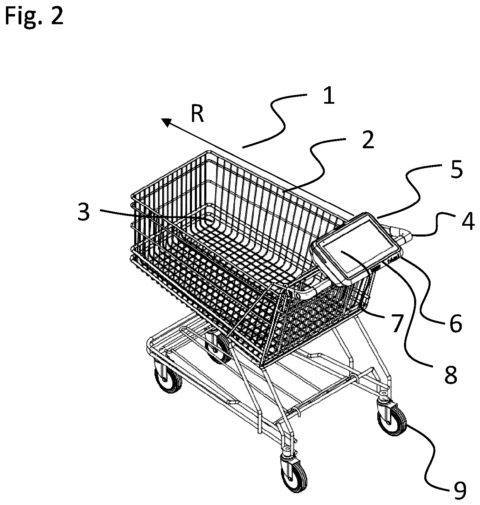

Fig. 2 is a schematic drawing of a shopping cart 1 with a terminal in a perspective view according to an embodiment. The shopping cart 1 may be pushed by a user into the pushing direction R. The shopping cart 1 comprises a wagon 2 with a main receiving area 3. The wagon 2 is provided with four wheels 9 which start rolling when the shopping cart is pushed in the pushing direction R. A handle bar 4 is coupled or affixed to the wagon 2. A terminal 5 having a housing and a display, particularly a touchscreen 7 is coupled to the handle bar 4. The terminal 5 has an energy storage unit 8 and an interface unit 6 via which the energy storage unit 8 can be charged. A charging cable 14 may therefore be connected to the energy storage unit 8 via the interface unit 6. The pushing direction R is defined as being parallel to a length axis of the shopping cart 1. The wagon 2 does not necessarily comprise a basket with a basket frame or a mesh structure which encloses the main receiving area 3. It can also just provide a platform considered as the main receiving area 3, where the products can be positioned.

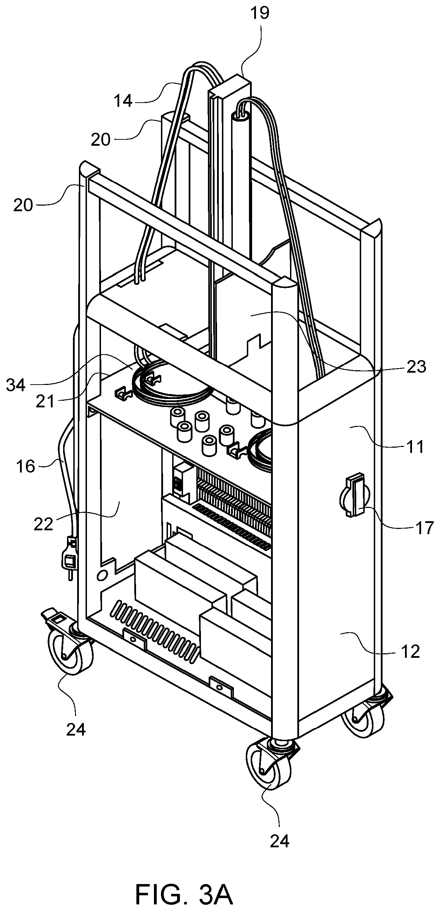

Fig. 3a is a perspective side view of a schematic drawing of a mobile charging unit 11 with an opened housing 12 according to an embodiment. In fact, a front side wall of the housing 12 is removed to allow an insight into the interior of the housing 12. The mobile charging unit 11 may have a first sub-compartment 21 (upper sub-compartment) and a second sub-compartment 22 (lower sub-compartment). The sub-compartments 21 are separated by a wall 34, which serves as a shelf for the charging cables 14 which are not in use. The mobile charging unit 11 comprises a single pillar 19 which extends from the upper side of the housing 12 in a central position, and which serves for guiding the charging cables 14 out of the second sub-compartment 22 of housing 12. In the shown configuration, two charging cables 14 extend out of the housing 12 to two opposite sides. The charging cables 14 are guided into the first sub-compartment 21, where their end portions are rolled and stored until being used. A flap 23 on each side allows opening and closing the first sub-compartment 23 manually from above. The flaps 23 have a notch for guiding the charging cables 14 through.

In the second sub-compartment 22, which is the lower sub-compartment, the electronic components are positioned. The power supply device comprises multiple units which may comprise rechargeable batteries and/or charging devices connected to a charge distributor to which the charging cables 14 are connected.

The mobile charging unit 11 further comprises a daisy chain socket 17, a power cable 16, four wheels 24 and two guide rails 20 which are rectangular in shape, and which extend from the upper length edges. The two guide rails 20 serve as handles for pushing and/or pulling the mobile charging unit 11 and prevent a user from sitting on the mobile charging unit 11 and thereby possibly damaging the mobile charging unit 11. The daisy chain socket 17 is provided on a side of the housing 12 opposite of the side on which the power cable 16 is provided.

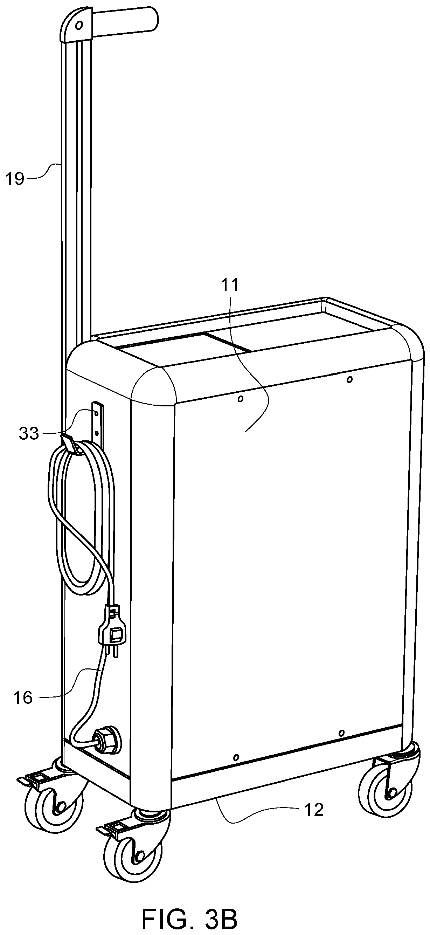

Fig. 3b is a perspective side view of a schematic drawing of a mobile charging unit 11 according to a further embodiment. This embodiment differs from the embodiment of Fig. 3a in that mobile charging unit 11 of Fig. 3b comprises a vertical pillar 19 which extends from a corner edge of the upper side of the housing 12 and not from a central position as it is the case in Fig. 3a. Moreover, the mobile charging unit 11 does not comprise guide rails 20 as the embodiment shown in Fig. 3a. Further, the upper surface of the housing 12 shown in Fig. 3b does not comprise flaps with a notch but sliding covers. All other features may be the same as described for the embodiment of Fig. 3a. In Fig. 3b, a hanger 33 for storing the power cable 16 is shown. The housing 12 is closed, at least on the sides which are shown.

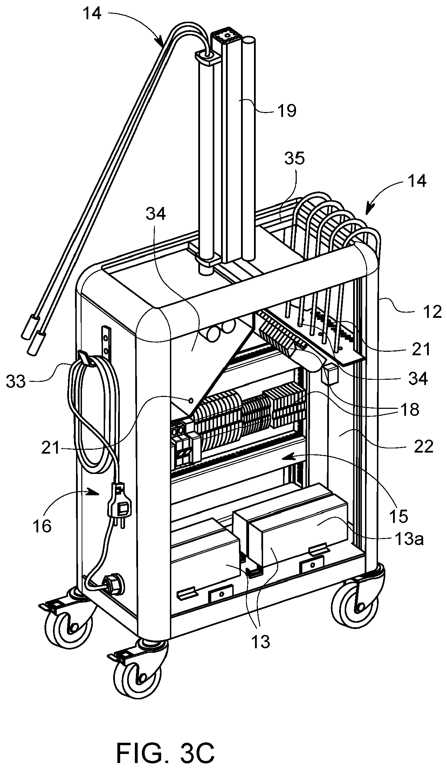

Fig. 3c is a perspective side view of a schematic drawing of a mobile charging unit 11 with an opened housing according to yet another embodiment. Similarly, as in Fig. 3a, a front side wall of the housing 12 is removed to allow an insight into the interior of the housing 12. The embodiment of Fig. 3c differs from that of Fig. 3a in that no guide rail is provided in this embodiment and five charging cables 14 are guided through an opening 35 and not all charging cables 14 are guided out of the housing 12 by the central pillar 19. Further, two inclined walls 34 separate the lower sub-compartment 22 from two upper sub-compartments 21. Ports 18 of a charge distributer 15 for the charging cables 14 which reach through the opening 35 is positioned below one of the inclined walls 34. All other features may be the same as described for the embodiment of Fig. 3a.

The following features can also be present in the embodiments of Fig. 3a and 3b. The mobile charging unit of Fig. 3c shows a hanger 33 for the power cable 16. Further, the power cable 16 reaches through the housing 12 and is connected to the power supply device 13 which comprises in this embodiment four charging devices 13a (and/or alternatively rechargeable batteries). A charge distributer 15 with a plurality of ports 18 for distributing the power of the power supply device 13 to a plurality of shopping carts 1 via charging cables 14 is shown.

All embodiments may have supported edges and corners being therefore very robust. The housing 12 of all embodiments may be made of a very resistant material such as metal which further increases the robustness.

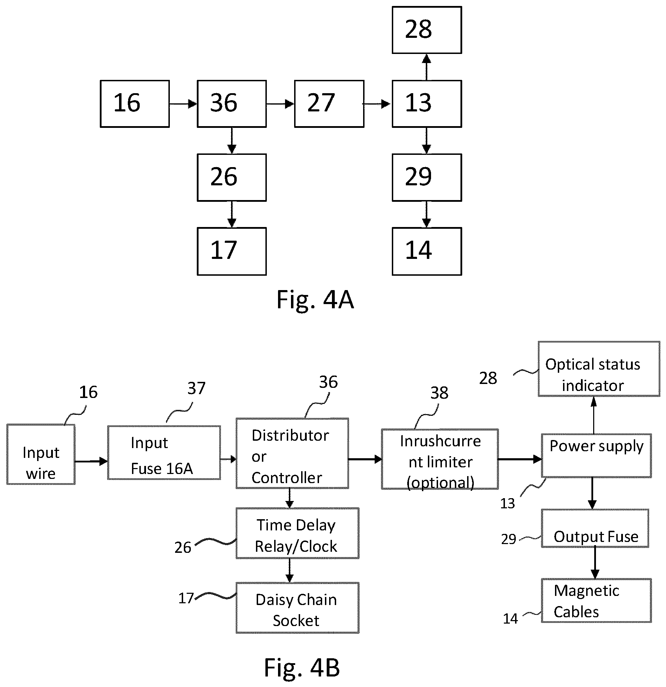

Fig. 4A is a schematic diagram illustrating the electrical connections of a system 10 according to an embodiment. A power supply cable 16 is connected on the one hand to a distributer element 36 that is connected to a daisy chain socket 17 via a time delay relays 26 and on the other hand to a power supply device 13 via an input fuse 27. The power supply device 13 may comprise four charging devices, for example. Each element of the power supply device 13, i.e., each of the four charging devices in this exemplary case, is connected to one of four status LEDs 28, on one side. On the other side, each of the four charging devices is connected to three charging cables 14 via three output fuses 29, such that twelve charging cables 14 can provide power from four charging devices of the power supply device 13. The charging cables 14 may have a magnetic connector for magnetically connecting with the energy storage unit of a shopping cart. This embodiment is just an example. The power supply device 13 may also comprise more or less charging devices. The power supply device 13 may alternatively or additionally comprise one or more rechargeable batteries. The status LEDs 28 for indicating the functional status of the elements of the power supply device 13 may be considered as being optional. The number of charging cables 14 connected to one element of the power supply device 13 may be more or less than three, e.g. 5 or 6. Also, the daisy chain socket 17 and/or the time delay relays 26 may be considered as being optional.

In another embodiment as shown in Fig. 4B the input wire or power supply cable 16 is connected to an input fuse 37 for detecting a high current and protects the system of the mobile charging unit and also of the shopping cart from being damaged due to high current or shorts. A distributer 36 which might be also realized as controller 36 of the mobile charging unit controls whether to supply the supplied current to the daisy chain socket 17 or to the power supply device 13 for preparing the supplied power to be supplied to the shopping cart. So depending on whether controller detects that one, some or all charging cables 14 are connected to interface units of the terminals, the supplied power is distributed. In case no charging cables 14 are connected to shopping carts, the controller 16 supplies the power directly the daisy chain socket 17. The power supplied to the daisy chain socket might be optionally delivered via a time delay or via a clock. Thus, in case many mobile charging devices are connected to each other via the daisy chain sockets 17, a time delay is activated to avoid a strong current during switching on a electrical consumers of the system. The controller 36 might control the time of the time delay by which the power is delayed to the daisy chain socket 17. Furthermore, there might be an adjustable clock which can be programmed to supply the power only in predetermined time periods to the days chain socket. Thus, a soft charging of the shopping carts during nights might be achieved.

As the power supply usually includes capacitors which will be charged during switching on, a strong inrush current might appear when switching on the power supply device 13. To avoid a starting current being too high, an inrush current limiter 38 is provided. As shown in Fig. 4B, the inrush current limiter 38 might be connected between the controller/distributer 36 and the power supply. Alternatively it might also switched in front of the controller/distributer 36. Thus, also the daisy chain is protected by the inrush current limiter 38. Any charging cable 14 is connected to an output fuse 29 and any charging cable is provided with an optical status indicator 28.

The controller/distributer 36 might also supply the power to the daisy chain socket 17 and to the power supply device 13. In case the load of the next or following mobile charging units is low power can be supplied to the daisy chain socket 17 and to the power supply device 13.

The delay caused by the time delay elements 26 may be set to 1 to 5 seconds, preferably 2 seconds, which can be controlled by the controller 36. The time delay may be set differently or same for multiple mobile charging units. So, when the chain of three mobile charging units is connected to each other before being connected to the mains, the first mobile charging unit will receive the power after being connected to the mains, the second mobile charging unit will receive the power after 2 second and the third will receive the power again after 2 seconds, e.g. 4 second after connecting the first to the mains.

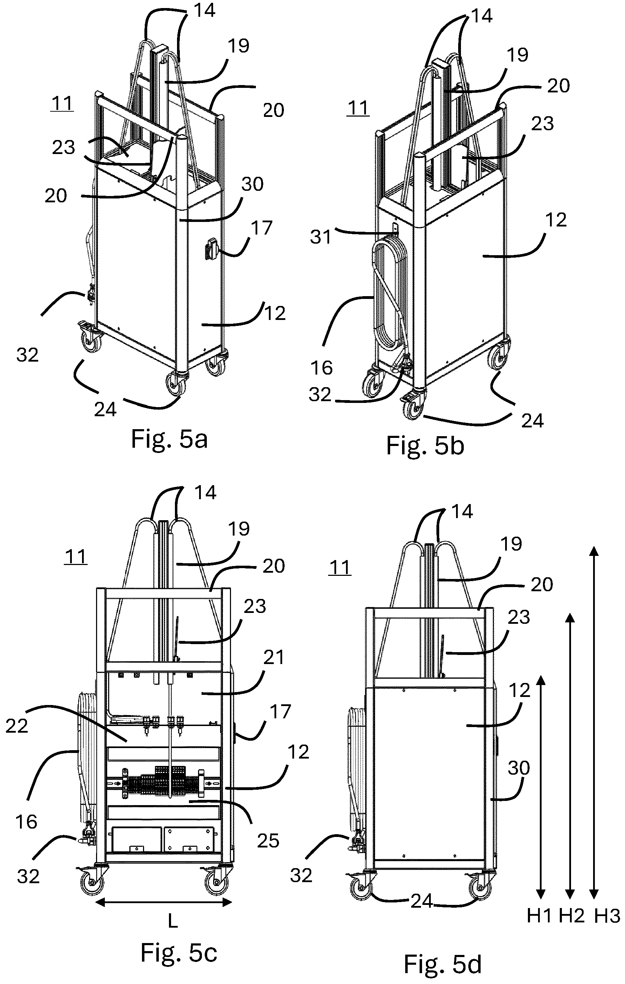

Fig. 5a is a perspective side view of a schematic drawing of the mobile charging unit 11 according to the embodiment of Fig. 3a. Fig. 5b is another perspective side view of a schematic drawing of the mobile charging unit 11 according to the embodiment of Fig. 3a. Fig. 5c is a side view of a schematic drawing of the mobile charging unit 11 with an opened housing 12 according to the embodiment of Fig. 3a. Fig. 5d is a side view of a schematic drawing of the mobile charging unit 11 with a closed housing 12 according to the embodiment of Fig. 3a. In Fig. 5c, the length L of the housing 12 of the mobile charging unit 11 is indicated. In Fig. 5d, the top end height H1 of the housing 12 of the mobile charging unit 11 is indicated, as well as the top end height H2 of the guide rail 20 of the mobile charging unit 11 and the top end height H3 of the pillar 19 of the mobile charging unit 11. Each top end height is measured from the ground to the upper most position of the respective element.

In these figures, one flap 23 is open and one flap 23 is closed. Some of the wheels 24 have stoppers to fix the wheels from rotating.

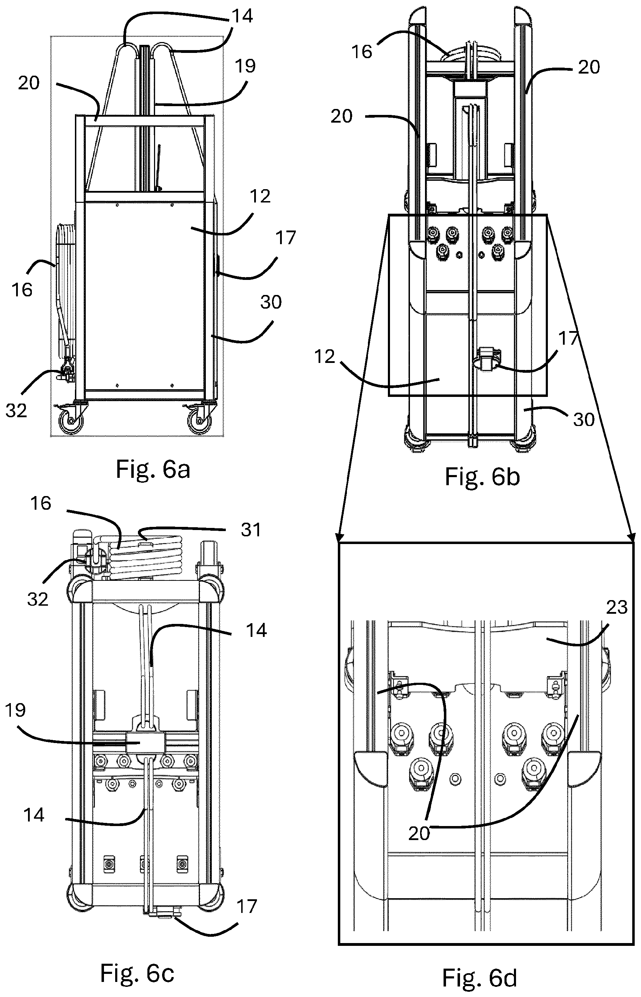

Fig. 6a is a side view of a schematic drawing of the mobile charging unit 11 according to the embodiment of Fig. 3a. Fig. 6b is perspective top view of a schematic drawing of the mobile charging unit 11 according to the embodiment of Fig. 3a. Fig. 6c is a top view of a schematic drawing of the mobile charging unit 11 according to the embodiment of Fig. 3a. Fig. 6d is a detail of Fig. 6b.

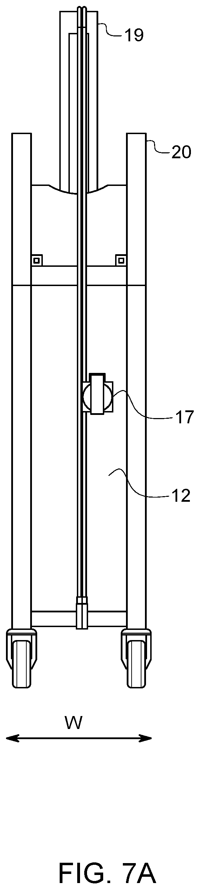

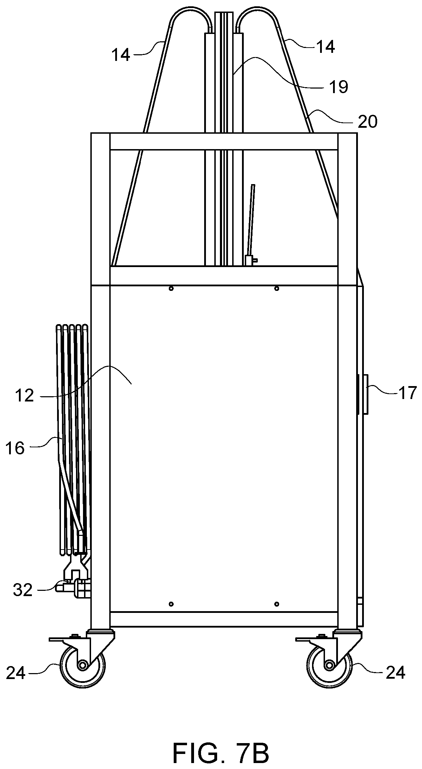

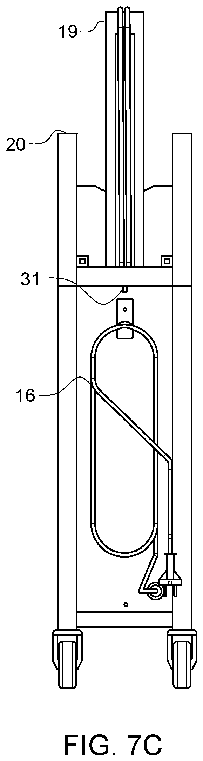

Fig. 7a is a front side view of a schematic drawing of the mobile charging unit 11 according to the embodiment of Fig. 3a. Fig. 7b is a side view of a schematic drawing of the mobile charging unit 11 according to the embodiment of Fig. 3a. Fig. 7c is a back side view of a schematic drawing of the mobile charging unit 11 according to the embodiment of Fig. 3a. In Fig. 7a, the width W of the housing 12 of the mobile charging unit 11 is indicated.

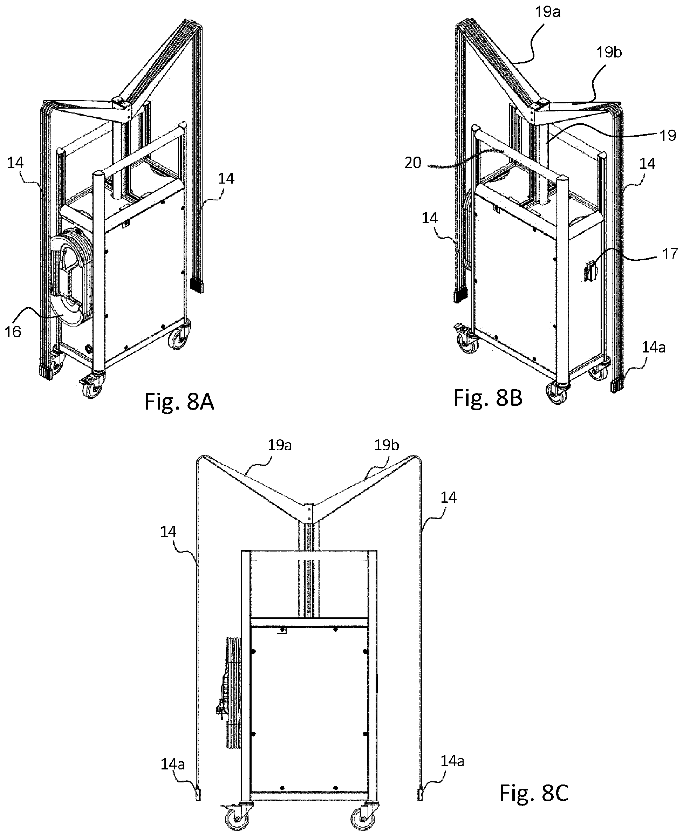

Fig. 8A, 8B, 8C illustrate a mobile charging device according to another embodiment. The internal construction is similar to the embodiments as shown above. In addition the other embodiments the pillar 19 includes a at least one preferably two pivotable arms 19a, 19b. These arms 19a, 19b are connected via hinges to the pillar 19. The arms 19a, 19b have an open frame for guiding the charging cables 14 inside the open space of the frame. The space is open to the upper side. At the end, e.g. the end of the arm connected to the pillar 19 there is an opening for feeding the charging cables 14 through the opening. Thus, the cables are guided along the pillar from the inside of the housing and then fed through e opening and open space of the frame to the distal end of the arm as the arm is inclined upwardly the charging cable hanging even further higher - thus any contact to the floor is prevented. The arms 19a, 19b are slidable along the pillar 19 to a height which is suitable for guiding the charging cables 14. The one or two arms 19a, 19b extend to a side of the housing of the mobile charging unit such that the end of the arm protrudes over upper surface of the housing. Thus, any contact of the charging cables 14 with the housing is also avoided. The arms 19a, 19b might be provided with different lengths depending on the requirements in the super markets and the required length of the charging cables. The arms further help to keep the connection procedure of the charging cable with the interface units o the shopping carts simple.

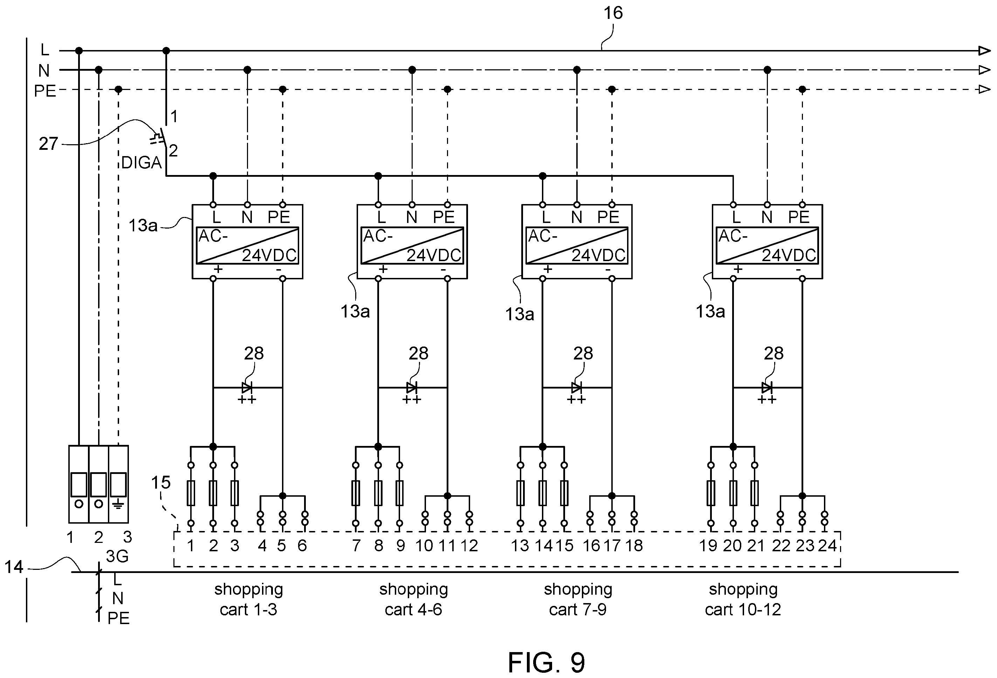

Fig. 9 and Fig. 209 correspond to a circuit diagram of a mobile charging unit 11 according to an embodiment. In Fig. 9 the power supply from an external power source to a plurality of shopping carts (shopping carts 1-12) is shown. The power supply cable 16, which may have a male plug connector, connects the external power supply such as a socket of the grid with the main elements of the mobile charging unit 11. An input fuse 27, which may be considered a circuit breaker to protect the elements of the mobile charging unit 11 from current peaks. Four charging devices 13a for transforming the AC voltage to a DC voltage are provided with power via the power supply cable 16. This is just an example for a possible embodiment. The number of charging devices 13a may vary and be more or less than four. Each charging device 13a is provided with a status LED 28 to indicate the functional status of the charging device 13a and to monitor the charging devices 13a. The charging devices 13a are connected to a charge distributer 15 for supplying 12 shopping carts with power, three shopping carts per each charging device 13a. The shopping carts may be connected to twelve ports of the charge distributer 15 by charging cables which may be magnetic cables. Each port of the charge distributer 15 may be associated with an output fuse to protect each shopping cart from an excessive current.

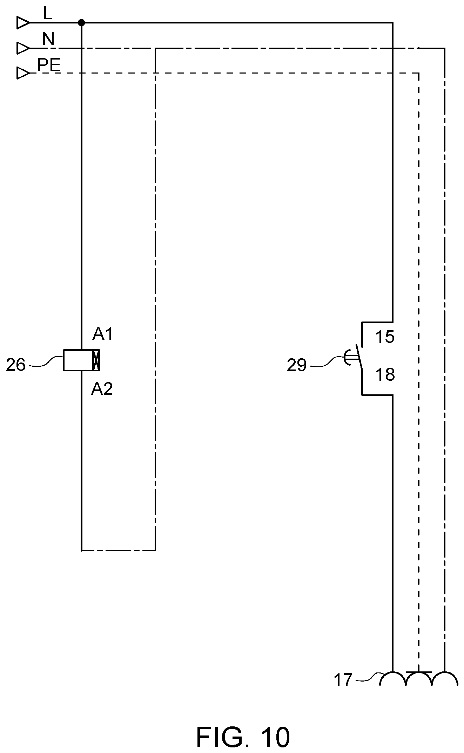

In Fig. 10, the daisy chain power supply of one mobile charging unit is shown. The daisy chain power supply is connected to the elements shown in Fig. 9 right after the input of the power supply cable 16 indicated by arrows on the upper right side of Fig. 9. Therefore, the daisy chain power supply of the present embodiment is directly connected to the external power supply via the power supply cable 16 without passing the charging devices 13a. If the system is supposed to be more independent from the grid, it may be possible that the daisy chain power supply is connected to rechargeable batteries provided in the mobile charging unit 11. In the present embodiment a time delay relays 26 is connected to the power supplied by the power supply cable 16 to control the daisy chain outlet such that not all consumers are provided with power at the same time, which might lead to exceeding currents and a breakdown of the power supply. The power is supplied to a daisy chain socket 17 provided on the housing of the mobile charging unit 11. The daisy chain socket 17 is either secured via an output fuse 29 or connected to a switch in that position which the output fuse 29 is shown. The switch may or may not allow to supply another mobile charging unit 11 with power if turned on or off.

The power supply of one mobile charging unit 11 is hence bifurcated to supply power to the shopping carts via the power supply device 13 of this particular mobile charging unit 11 on the one hand and to supply power to other mobile charging units 11 on the other hand via the daisy chain sockets 17.

### Reference signs

| | | | |
|---|---|---|---|
| 1 | shopping cart | 24 | wheels of mobile charging unit |
| 2 | wagon | 25 | inner compartment of the housing |
| 3 | main receiving area | 26 | time delay relays/ clock |
| 4 | handle bar | 27 | input fuse |
| 5 | terminal | 28 | Status LEDs |
| 6 | interface unit | 29 | output fuse |
| 7 | display of terminal | 30 | frame of the housing |
| 8 | energy storage unit of shopping cart | 31 | mounting part for the charging cable |
| 9 | wheels of shopping cart | 32 | connector of the charging cable |
| 10 | system | 33 | hanger |
| 11 | mobile charging unit | 34 | wall between sub-compartments |
| 11a | mobile charging unit (main module) | 35 | opening |
| 11b | mobile charging unit (slave module) | 36 | Distributer/controller |
| 12 | housing of mobile charging unit | 37 | Input fuse |
| 13 | power supply device | 38 | Inrush current limiter |
| 13a | charging device | H1 | top end height of the housing of the mobile |
| 14 | charging cable | H2 | top end height of the guide rail of the mobile |
| 15 | charge distributer | H3 | top end height of the pillar of the mobile |
| 16 | power supply cable | L | length of the housing of the mobile charging |
| 17 | daisy chain socket | R | pushing direction of shopping cart |
| 18 | plurality of ports | W | width of the housing of the mobile charging |
| 19 | pillar | | |
| 20 | guide rail/ handle of mobile charging unit | | |
| 21 | first sub-compartment of mobile charging | | |
| 22 | second sub-compartment of mobile | | |
| 23 | flap | | |

## Claims

1. Mobile charging unit (11) for charging a plurality of shopping carts (1) including at least one electronic component (5), the mobile charging unit (11) comprising:
a housing (12) made of robust material,
a plurality of wheels (24) for moving the mobile charging unit (11),
a power supply device (13) inside the housing (12) being configured to provide power for charging the electronic component (5) of the plurality of shopping carts (1);
a power supply cable (16) configured to be connected to the mains or to another mobile charging unit (11),
a daisy chain socket (17) configured to receive a power supply cable (16) of another mobile charging unit (11), and
a distributor (36) connected to the power supply cable (16) for supplying the power either to the power supply device (13) or to the daisy chain socket (17) or to both.

2. The mobile charging unit (11) of claim 1, wherein the power supply device (13) is configured to be coupled with an external energy source and comprises at least one rechargeable battery and/or at least one charging device (13a).

3. The mobile charging unit (11) of claim 1 or 2, wherein the at least one mobile charging unit (11) further comprises:
a charge distributer (15) comprising a plurality of ports (18), wherein each port (18) is configured to be connected to the power supply device (13); and/or
at least one charging cable (14) connected to the power supply device (13) and/or to one of the plurality of ports (18) for being connected with the interface unit (6) at the shopping cart or with the energy storage unit (8) of the shopping cart.

4. The mobile charging unit (11) of any one of the claims 1-3, further comprising a plurality of charging cables (14) connected to the charge distributer (15) or to the power supply device (13), and/or each one of the charging cables (14) is configured to provide power from the charge distributer (15) via one of the plurality of ports (18) to the respective energy storage unit (8) of one of the plurality of shopping carts (1).

5. The mobile charging unit (11) of any one of the claims 1-4, wherein the power supply cable (16) is configured for being connected with the external energy source for receiving power from the external energy source; and/or for being coupled with another mobile charging unit (11) for supplying power from the mobile charging unit (11) to the other mobile charging unit (11) and/or for receiving power from the other mobile charging unit (11).

6. The mobile charging unit (11) of any one of the claims 1-5, wherein the daisy chain socket (17) is coupled to the housing (12) of the mobile charging units (11), more preferably at the opposite side of the housing side having the power supply cable (16).

7. The mobile charging unit (11) of any one of the claims 1-6, wherein the mobile charging unit (11) comprises at least one LED (28) and/or each of port (18) is assigned to an LED (28), preferably the LED (28) is configured to visibly indicate whether power can be distributed and provided to the energy storage unit (8) via the port (18).

8. The mobile charging unit (11) of any one of the claims 3 to 7, further comprising an electrical dummy cell configured to be contacted with the at least one charging cable (14); and/or configured to indicate whether power can be distributed and provided to the energy storage unit (8) via a respective one of the plurality of ports (18) and a respective one of the plurality of charging cables (14).

9. The mobile charging unit (11) of any one of the claims 1 to 8, wherein the mobile charging unit (11) comprises a time delay element (26) configured to delay the delivery of power to another mobile charging unit (11), preferably via the daisy chain socket (17) and/or further comprising an inrush current limiting element (38) or a limiting element for controlling the current supply.

10. The mobile charging unit (11) of any one of the claims 1-9, comprising at least one of:
a box-shaped housing (12), preferably made of metal,
a vertical pillar (19) protruding from an upper portion of the housing (12) for at least partially guiding the at least one charging cable (14) from within the housing (12) out of the housing (12),
at least one pivotable arm (19a, 19b) coupled to the pillar (19) for guiding at least one charging cable (14),
a guide rail (20) spaced apart from the upper portion of the housing (12).

11. The mobile charging unit (11) of any one of the claims 1-10, wherein the housing (12) comprises a first sub-compartment (21) for storing at least a portion of the at least one charging cable (14) when not being used, preferably,
the first sub-compartment comprises a flap (23) configured to be manually opened and/or the first sub-compartment (21) is configured to store a cleaning solution for cleaning at least a portion of the at least one charging cable (14).

12. A system (10), comprising a mobile charging unit (1) as claimed in any one of the claims 1-11, further comprising a plurality of shopping carts (1), each having a terminal (5) for outputting and/or receiving information, an energy storage unit (8) for supplying power to the terminal (5), and an interface unit (6) for at least receiving power for charging the energy storage unit (8).

13. The system (10) of claim 12, comprising a plurality of mobile charging units (11), wherein a first group of shopping carts (1) is charged via a first mobile charging unit (11) and a second group of shopping carts (1) is charged via a second mobile charging unit (11), the second mobile charging unit (11) being connected to the first mobile charging unit (11) via its power supply cable (16) being connected to the daisy chain socket (17) of the first mobile charging unit (11).

14. The system (10) of the claims 12 or 13, wherein the mobile charging unit (11) and the terminal (5) are configured to exchange data with each other via the charging cable (14) and/or wirelessly.

15. The system (10) of any one of the claims 12, 13 or 14, wherein the system is configured for wirelessly charging the energy storage unit (8) and/or the system comprising an anti-theft system.

## Patentansprüche

1. Mobile Ladeeinheit (11) zum Aufladen mehrerer Einkaufswagen (1), die mindestens eine elektronische Komponente (5) enthalten, wobei die mobile Ladeeinheit (11) Folgendes umfasst:
ein Gehäuse (12), das aus einem widerstandsfähigen Material hergestellt ist,
mehrere Räder (24) zum Bewegen der mobilen Ladeeinheit (11),
eine Stromversorgungsvorrichtung (13) im Inneren des Gehäuses (12), die konfiguriert ist, Energie zum Aufladen der elektronischen Komponente (5) der mehreren Einkaufswagen (1) bereitzustellen;
ein Stromversorgungskabel (16), das konfiguriert ist, mit dem Stromversorgungsnetz oder mit einer weiteren mobilen Ladeeinheit (11) verbunden zu sein,
eine Hintereinanderschaltungsanschlussbuchse (17), die konfiguriert ist, ein Stromversorgungskabel (16) einer weiteren mobilen Ladeeinheit (11) aufzunehmen, und
einen Verteiler (36), der zum Zuführen der Energie entweder zur Stromversorgungsvorrichtung (13) oder zur Hintereinanderschaltungsanschlussbuchse (17) oder zu beiden mit dem Stromversorgungskabel (16) verbunden ist.

2. Mobile Ladeeinheit (11) nach Anspruch 1, wobei die Stromversorgungsvorrichtung (13) konfiguriert ist, mit einer externen Energiequelle gekoppelt zu sein, und mindestens eine wiederaufladbare Batterie und/oder mindestens eine Ladevorrichtung (13a) umfasst.

3. Mobile Ladeeinheit (11) nach Anspruch 1 oder 2, wobei die mindestens eine mobile Ladeeinheit (11) ferner Folgendes umfasst:
einen Ladeverteiler (15), der mehrere Anschlüsse (18) umfasst, wobei jeder Anschluss (18) konfiguriert ist, mit der Stromversorgungsvorrichtung (13) verbunden zu sein; und/oder
mindestens ein Ladekabel (14), das mit der Stromversorgungsvorrichtung (13) und/oder mit einem der mehreren Anschlüsse (18) verbunden ist, damit es mit der Schnittstelleneinheit (6) am Einkaufwagen oder mit der Energiespeichereinheit (8) des Einkaufswagens verbunden wird.

4. Mobile Ladeeinheit (11) nach einem der Ansprüche 1-3, die ferner mehrere Ladekabel (14) umfasst, die mit dem Ladeverteiler (15) oder mit der Stromversorgungsvorrichtung (13) verbunden sind, und/oder wobei jedes der Ladekabel (14) konfiguriert ist, Energie vom Ladeverteiler (15) über einen der mehreren Anschlüsse (18) für die jeweilige Energiespeichereinheit (8) von einem der mehreren Einkaufswagen (1) bereitzustellen.

5. Mobile Ladeeinheit (11) nach einem der Ansprüche 1-4, wobei das Stromversorgungskabel (16) konfiguriert ist, zum Empfangen von Energie von der externen Energiequelle mit der externen Energiequelle verbunden zu sein; und/oder zum Zuführen von Energie von der mobilen Ladeeinheit (11) zu einer anderen mobilen Ladeeinheit (11) und/oder zum Empfangen von Energie von der anderen mobilen Ladeeinheit (11) mit einer weiteren mobilen Ladeeinheit (11) gekoppelt zu sein.

6. Mobile Ladeeinheit (11) nach einem der Ansprüche 1-5, wobei die Hintereinanderschaltungsanschlussbuchse (17) mit dem Gehäuse (12) der mobilen Ladeeinheiten (11), stärker bevorzugt auf der Seite, die der Seite des Gehäuses mit dem Stromversorgungskabel (16) gegenüberliegt, gekoppelt ist.

7. Mobile Ladeeinheit (11) nach einem der Ansprüche 1-6, wobei die mobile Ladeeinheit (11) mindestens eine LED (28) umfasst und/oder jeder der Anschlüsse (18) einer LED (28) zugewiesen ist, wobei die LED (28) vorzugsweise konfiguriert ist, sichtbar anzuzeigen, ob über den Anschluss (18) Energie verteilt und der Energiespeichereinheit (8) bereitgestellt werden kann.

8. Mobile Ladeeinheit (11) nach einem der Ansprüche 3 bis 7, die ferner eine elektrische Blindzelle umfasst, die konfiguriert ist, sich mit dem mindestens einen Ladekabel (14) in Kontakt zu befinden; und/oder konfiguriert ist anzugeben, ob über einen jeweiligen der mehreren Anschlüsse (18) und ein jeweiliges der mehreren Ladekabel (14) Energie verteilt und der Energiespeichereinheit (8) bereitgestellt werden kann.

9. Mobile Ladeeinheit (11) nach einem der Ansprüche 1 bis 8, wobei die mobile Ladeeinheit (11) ein Zeitverzögerungselement (26) umfasst, das konfiguriert ist, die Abgabe von Energie an eine weitere mobile Ladeeinheit (11), vorzugsweise über die Hintereinanderschaltungsanschlussbuchse (17), zu verzögern, und/oder ferner ein Einschaltstrom-Begrenzungselement (38) oder ein Begrenzungselement zum Steuern der Stromzufuhr umfasst.

10. Mobile Ladeeinheit (11) nach einem der Ansprüche 1-9, die Folgendes umfasst:
ein kastenförmiges Gehäuse (12), das vorzugsweise aus Metall hergestellt ist, und/oder
eine vertikale Säule (19), die zum zumindest teilweisen Führen des mindestens einen Ladekabels (14) aus dem Inneren des Gehäuses (12) aus dem Gehäuse (12) heraus von einem oberen Abschnitt des Gehäuses (12) vorsteht, und/oder
mindestens einen drehbaren Arm (19a, 19b), der zum Führen mindestens eines Ladekabels (14) mit der Säule (19) gekoppelt ist, und/oder
eine Führungsschiene (20), die vom oberen Abschnitt des Gehäuses (12) beabstandet ist.

11. Mobile Ladeeinheit (11) nach einem der Ansprüche 1-10, wobei das Gehäuse (12) vorzugsweise ein erstes Unterfach (21) zum Lagern zumindest eines Abschnitts des mindestens einen Ladekabels (14), wenn es nicht verwendet wird, umfasst,
wobei das erste Unterfach eine Klappe (23) umfasst, die konfiguriert ist, manuell geöffnet zu werden, und/oder das erste Unterfach (21) konfiguriert ist, eine Reinigungslösung zum Reinigen zumindest eines Abschnitts des mindestens einen Ladekabels (14) zu speichern.

12. System (10), das eine mobile Ladeeinheit (1) nach einem der Ansprüche 1-11 und ferner mehrere Einkaufswagen (1) umfasst, die jeweils einen Anschluss (5) zum Ausgeben und/oder Empfangen von Informationen, eine Energiespeichereinheit (8) zum Zuführen von Energie zum Anschluss (5) und eine Schnittstelleneinheit (6) zumindest zum Empfangen von Energie zum Aufladen der Energiespeichereinheit (8) aufweisen.

13. System (10) nach Anspruch 12, das mehrere mobile Ladeeinheiten (11) umfasst, wobei eine erste Gruppe von Einkaufswagen (1) über eine erste mobile Ladeeinheit (11) aufgeladen wird und eine zweite Gruppe von Einkaufswagen (1) über eine zweite mobile Ladeeinheit (11) aufgeladen wird, wobei die zweite mobile Ladeeinheit (11) über ihr Stromversorgungskabel (16), das mit der Hintereinanderschaltungsanschlussbuchse (17) der ersten mobilen Ladeeinheit (11) verbunden ist, mit der ersten mobilen Ladeeinheit (11) verbunden ist.

14. System (10) nach den Ansprüchen 12 oder 13, wobei die mobile Ladeeinheit (11) und der Anschluss (5) konfiguriert sind, über das Ladekabel (14) und/oder drahtlos Daten miteinander auszutauschen.

15. System (10) nach einem der Ansprüche 12, 13 oder 14, wobei das System zum drahtlosen Aufladen der Energiespeichereinheit (8) konfiguriert ist und/oder das System ein Diebstahlschutzsystem umfasst.

## Revendications

1. Unité de charge mobile (11) destinée à charger une pluralité de chariots à provisions (1) incluant au moins un composant électronique (5), l'unité de charge mobile (11) comportant :
un caisson (12) en un matériau robuste,
une pluralité de roues (24) pour déplacer l'unité de charge mobile (11),
un dispositif d'alimentation (13) à l'intérieur du caisson (12) étant configuré pour fournir une alimentation destinée à charger le composant électronique (5) de la pluralité de chariots à provisions (1) ;
un câble d'alimentation (16) configuré pour être raccordé au secteur ou à une autre unité de charge mobile (11),
une prise en cascade (17) configurée pour recevoir un câble d'alimentation (16) d'une autre unité de charge mobile (11), et
un distributeur (36) raccordé au câble d'alimentation (16) pour fournir l'alimentation au dispositif d'alimentation (13) ou à la prise en cascade (17), ou aux deux.

2. Unité de charge mobile (11) selon la revendication 1, dans laquelle le dispositif d'alimentation (13) est configuré pour être couplé à une source d'énergie externe et comporte au moins une batterie rechargeable et/ou au moins un dispositif de charge (13a).

3. Unité de charge mobile (11) selon la revendication 1 ou 2, dans laquelle la au moins une unité de charge mobile (11) comporte en outre :
un répartiteur de charge (15) comportant une pluralité de ports (18), dans lequel chaque port (18) est configuré pour être raccordé au dispositif d'alimentation (13) ; et/ou
au moins un câble de charge (14) raccordé au dispositif d'alimentation (13) et/ou à un port de la pluralité de ports (18) pour être raccordé à l'unité d'interface (6) sur le chariot à provisions ou à l'unité de stockage d'énergie (8) du chariot à provisions.

4. Unité de charge mobile (11) selon l'une quelconque des revendications 1 à 3, comportant en outre une pluralité de câbles de charge (14) raccordés au répartiteur de charge (15) ou au dispositif d'alimentation (13), et/ou chacun des câbles de charge (14) est configuré pour fournir une alimentation à partir du répartiteur de charge (15) via un port de la pluralité de ports (18) à l'unité de stockage d'énergie (8) respective d'un chariot de la pluralité de chariots à provisions (1).

5. Unité de charge mobile (11) selon l'une quelconque des revendications 1 à 4, dans laquelle le câble d'alimentation (16) est configuré pour être raccordé à la source d'énergie externe pour recevoir l'alimentation provenant de la source d'énergie externe ; et/ou pour être couplé à une autre unité de charge mobile (11) pour fournir l'alimentation provenant de l'unité de charge mobile (11) à l'autre unité de charge mobile (11) et/ou pour recevoir l'alimentation provenant de l'autre unité de charge mobile (11).

6. Unité de charge mobile (11) selon l'une quelconque des revendications 1 à 5, dans laquelle la prise en cascade (17) est couplée au caisson (12) des unités de charge mobiles (11), de manière plus préférée du côté opposé du côté de caisson ayant le câble d'alimentation (16).

7. Unité de charge mobile (11) selon l'une quelconque des revendications 1 à 6, dans laquelle l'unité de charge mobile (11) comporte au moins une LED (28) et/ou chacun des ports (18) est affecté à une LED (28), la LED (28) étant de préférence configurée pour indiquer de manière visible si l'alimentation peut être distribuée et fournie à l'unité de stockage d'énergie (8) via le port (18).

8. Unité de charge mobile (11) selon l'une quelconque des revendications 3 à 7, comportant en outre une cellule électrique fictive configurée pour être mise en contact avec le au moins un câble de charge (14) ; et/ou configurée pour indiquer si l'alimentation peut être distribuée et fournie à l'unité de stockage d'énergie (8) via un port respectif de la pluralité de ports (18) et un câble respectif de la pluralité de câbles de charge (14).

9. Unité de charge mobile (11) selon l'une quelconque des revendications 1 à 8, dans laquelle l'unité de charge mobile (11) comporte un élément de temporisation (26) configuré pour retarder la fourniture de l'alimentation à une autre unité de charge mobile (11), de préférence via la prise en cascade (17) et/ou comportant en outre un élément de limitation de courant d'appel (38) ou un élément de limitation pour commander l'alimentation en courant.

10. Unité de charge mobile (11) selon l'une quelconque des revendications 1 à 9, comportant au moins un élément parmi :
un caisson (12) en forme de boîtier, de préférence en métal,
un montant vertical (19) faisant saillie à partir d'une partie supérieure du caisson (12) pour guider au moins partiellement le au moins un câble de charge (14) depuis l'intérieur du caisson (12) à l'extérieur du caisson (12),
au moins un bras pivotant (19a, 19b) couplé au montant (19) pour guider au moins un câble de charge (14),
un rail de guidage (20) espacé de la partie supérieure du caisson (12).

11. Unité de charge mobile (11) selon l'une quelconque des revendications 1 à 10, dans laquelle le caisson (12) comporte un premier sous-compartiment (21) pour stocker au moins une partie du au moins un câble de charge (14) lorsqu'il n'est pas utilisé, de préférence,
le premier sous-compartiment comporte un rabat (23) configuré pour être ouvert manuellement et/ou le premier sous-compartiment (21) est configuré pour stocker une solution de nettoyage pour nettoyer au moins une partie du câble de charge (14).

12. Système (10), comportant une unité de charge mobile (1) selon l'une quelconque des revendications 1 à 11, comportant en outre une pluralité de chariots à provisions (1), chacun ayant un terminal (5) pour transmettre et/ou recevoir des informations, une unité de stockage d'énergie (8) pour fournir l'alimentation au terminal (5), et une unité d'interface (6) pour au moins recevoir l'alimentation pour charger l'unité de stockage d'énergie (8).

13. Système (10) selon la revendication 12, comportant une pluralité d'unités de charge mobiles (11), dans lequel un premier groupe de chariots à provisions (1) est chargé via une première unité de charge mobile (11) et un second groupe de chariots à provisions (1) est chargé via une seconde unité de charge mobile (11), la seconde unité de charge mobile (11) étant raccordée à la première unité de charge mobile (11) via son câble d'alimentation (16) étant raccordé à la prise en cascade (17) de la première unité de charge mobile (11).

14. Système (10) selon la revendication 12 ou 13, dans lequel l'unité de charge mobile (11) et le terminal (5) sont configurés pour échanger des données l'un avec l'autre via le câble de charge (14) et/ou de manière sans fil.

15. Système (10) selon l'une quelconque des revendications 12, 13 ou 14, dans lequel le système est configuré pour charger de manière sans fil l'unité de stockage d'énergie (8) et/ou le système comportant un système antivol.
